# EUROPÄISCHE PATENTSCHRIFT

(11) **EP 4 108 062 B1**
(45) Veröffentlichungstag und Bekanntmachung des Hinweises auf die Patenterteilung: **20.08.2025**
(21) Anmeldenummer: 22156914.8
(22) Anmeldetag: 16.02.2022
(51) Int. Cl.: A01D 41/12, A01D 75/00, A01F 12/40, A01F 12/42, A01F 12/44, A01F 12/48

(54) **SAUGWINDREINIGUNG**
SUCTION WIND CLEANING
NETTOYAGE PAR ASPIRATION

(30) Priorität: 24.06.2021 DE 102021116329
(43) Veröffentlichungstag der Anmeldung: 28.12.2022
(73) Patentinhaber: CLAAS Selbstfahrende Erntemaschinen GmbH, 33428 Harsewinkel (DE)
(72) Erfinder: Schwarz, Michael, 53604 Bad Honnef (DE); Diekamp, Andreas, 49176 Hilter (DE); Vieregge, Christopher, 32694 Dörentrup (DE); Beckmann, Hermann-Konstantin, 32584 Löhne (DE)
(74) Vertreter: CLAAS Gruppe

(56) Entgegenhaltungen:
- EP-A1- 3 662 737
- EP-B1- 3 384 754
- AU-A4- 2021 101 123
- US-A1- 2020 107 502
- US-A1- 2020 296 896
- US-B2- 10 004 176

## Beschreibung

Die vorliegende Erfindung betrifft einen selbstfahrenden Mähdrescher, umfassend eine Dreschvorrichtung, eine Abscheidevorrichtung, eine Reinigungsvorrichtung, der eine Sauggebläseanordnung mit zumindest einem Gehäuse, einem um eine Rotationsachse drehbeweglich angeordneten Rotor, zumindest einer Eintrittsöffnung und zumindest einer Austrittsöffnung nachgeordnet ist, eine Häckselvorrichtung sowie zumindest eine Verteilvorrichtung zur Annahme und Ausbringung eines die Häckselvorrichtung durchlaufenden Gutstroms.

Aus der EP 1 790 208 A2 ist ein selbstfahrender Mähdrescher mit einer Sauggebläseanordnung der eingangs genannten Art bekannt. Die Sauggebläseanordnung ist einer Reinigungsvorrichtung prozesstechnisch nachgeordnet und dient dazu, einen im Wesentlichen aus Nichtkornbestandteilen bestehenden Gutstrom aus Kurzstroh, Spreu und dergleichen aus einem Maschinengehäuse heraus zu fördern und an eine Verteilvorrichtung zu übergeben, welche den Gutstrom über eine Verteilbreite auf dem Feldboden verteilt.

Ein wesentlicher Nachteil an dem von der EP 1 790 208 A2 offenbarten Mähdrescher ist, dass der auf dem Feldboden ausgebrachte Gutstrom häufig Unkrautsamen enthält, die zu einer unerwünschten Unkrautbildung führen. Durch die strenge Reglementierung von Pflanzenschutzmitteln und die fortschreitende Bildung von Unkrautresistenzen sind die auf dem Feldboden ausgebrachten Unkrautsamen kritisch zu betrachten.

Eine mechanische Lösung zur Bekämpfung von Unkrautsamen ist aus der WO2009/100500A1 bekannt geworden. Diese offenbart eine Unkrautsamenzerstörungseinrichtung, die als separates Anbauelement bedarfsweise an eine Erntemaschine montierbar ist. Die hier offenbarte Unkrautsamenzerstörungseinrichtung umfasst einen Rotor und einen ortsfest im Gehäuse angeordneten Stator. Der Rotor führt im Betriebszustand eine Relativbewegung zu dem Stator aus, sodass ein dem Rotor zugeführter Erntegutstrom beschleunigt wird. Die in dem Erntegutstrom enthaltenen Unkrautsamen prallen gegen den Stator und werden durch den Aufprall zerstört. Dem Rotor wird durch ein aktives Fördermittel der Erntegutstrom zugeführt. EP 3 662 737 offenbart eine weitere mechanische Lösung zur Bekämpfung von Unkrautsamen.

Als separate Anbauelemente ausgeführte Unkrautsamenzerstörungseinrichtungen sind dahingehend nachteilig, dass diese bei der Ernte von Feldbeständen mit größeren zu erwartenden Mengen von Unkrautsamen zunächst an dem Mähdrescher montiert und anschließend wieder demontiert werden müssen. Im Bedarfsfall ist ein kurzfristiges Zu- und Abschalten nicht möglich, sodass regelmäßig die Unkrautsamenzerstörungseinrichtungen auch in Feldabschnitten mit sehr geringen Mengen an Unkrautsamen eingesetzt werden. Eine nicht zweckmäßige Verwendung der Unkrautsamenzerstörungseinrichtung generiert infolge des zusätzlichen Leistungsbedarfs der Einrichtung unerwünschte Betriebskosten. Auch die Beschickung der Unkrautsamenzerstörungseinrichtung durch ein aktives Fördermittel führt zu einem unerwünscht hohen Leistungs- und Raumbedarf.

Es ist deshalb Aufgabe der Erfindung, die beschriebenen Nachteile des Standes der Technik zu vermeiden und insbesondere eine Erntemaschine mit einer Unkrautsamenzerstörungseirichtung zu schaffen, die einen geringen Raum- und Leistungsbedarf aufweist, sowie eine Unkrautsamenzerstörungseirichtung zu schaffen, die in die Baugruppe des Mähdreschers integriert und ohne zusätzlichen Montageaufwand einsetzbar ist.

Diese Aufgabe wird erfindungsgemäß durch die kennzeichnenden Merkmale des Anspruchs 1 gelöst.

Gemäß dem Anspruch 1 wird ein selbstfahrender Mähdrescher, umfassend eine Dreschvorrichtung, eine Abscheidevorrichtung, eine Reinigungsvorrichtung, der eine Sauggebläseanordnung mit zumindest einem Gehäuse, einem um eine Rotationsachse drehbeweglich angeordneten Rotor, zumindest einer Eintrittsöffnung und zumindest einer Austrittsöffnung nachgeordnet ist, eine Häckselvorrichtung sowie zumindest eine Verteilvorrichtung zur Annahme und Ausbringung eines die Häckselvorrichtung durchlaufenden Gutstroms, vorgeschlagen, wobei die Sauggebläseanordnung eine Unkrautsamenzerstörungseinrichtung umfasst, wobei die Unkrautsamenzerstörungseinrichtung in das Gehäuse der Sauggebläseanordnung integriert ist, wobeider Rotor verdrehfest auf einer Welle angeordnet ist und der Stator drehbeweglich auf der Welle gelagert ist.

Die Erfindung hat viele Vorteile. Die Integration der Unkrautsamenzerstörungseinrichtung innerhalb des Gehäuses der Sauggebläseanordnung ermöglicht es die Funktion selbiger in einer gemeinsamen Baugruppe zu realisieren. Der von dem Sauggebläse erzeugte Luft- und Gutstrom wird somit für die Reinigung des auf den Sieben der Reinigungseinrichtung befindlichen Ernteguts, für die Unkrautsamenzerstörung innerhalb der Sauggebläseanordnung und zum Auswurf eines Gutstroms auf einem hinter dem Mähdrescher befindlichen Untergrunds verwendet. Neben einer Senkung der Herstellungskosten werden auch die Betriebskosten des Mähdreschers gesenkt. Im Bedarfsfall einer Unkrautsamenzerstörungseinrichtung ist keine Montage eines Anbaugeräts erforderlich. Es werden auch keine aktiven Fördermittel zur Beschickung der Unkrautsamenzerstörungseinrichtung benötigt, sodass keine zusätzlichen Antriebsmittel erforderlich sind. Ein besonderer Vorteil der Sauggebläseanordnung besteht darin, dass diese eine gleichmäßige Verteilung der Restkornbestandteile und auch der Nichtkornbestandteile auf dem Untergrund eines Feldes erreicht. Dadurch das nunmehr keine Montage einer der Sauggebläseanordnung nachgeordneten separaten Unkrautsamenzerstörungseinrichtung erforderlich ist, wird auch bei einer Erntefahrt von Feldbeständen mit erhöhten Mengen von Unkrautsamen mittels der Sauggebläseanordnung eine gleichmäßige Verteilung der Restkornbestandteile erreicht.

In einer vorteilhaften Ausgestaltung können zumindest zwei rotierbeweglich angeordnete Elemente die Unkrautsamenzerstörungseinrichtung bilden, wobei die Elemente zur Durchführung einer Relativbewegung zueinander eingerichtet sind. Mittels einer derartigen Relativbewegung ist ein auf die Unkrautsamen wirkender Schereffekt oder ein die Zerstörung der Unkrautsamen bewirkender Aufprall erzeugbar. Mit Zerstörung der Unkrautsamen ist hier das Erreichen einer Keimunfähigkeit selbiger zu verstehen. Vorteilhaft ist auch, dass neben den Unkrautsamen die Unkrautsamenzerstörungseinrichtung zusätzlich eine Zerstörung von Verlustkörnern bewirkt, sodass dies ebenfalls zu einer Erleichterung der nachgeschalteten Bodenbearbeitung führt.

Eine vorteilhafte Weiterbildung sieht vor, dass die Unkrautsamenzerstörungseinrichtung in einem aktivierten Zustand zur Zerstörung von in einem Gut- und Luftstrom befindlichen Unkrautsamen eingerichtet ist und in einem deaktivierten Zustand die Funktion zur Zerstörung der Unkrautsamen deaktiviert ist, wobei die Sauggebläseanordnung unabhängig von dem Zustand der Unkrautsamenzerstörungseinrichtung betreibbar ist. In einem aktivierten Zustand der Unkrautsamenzerstörungseinrichtung ist der Leistungsbedarf der Sauggebläseanordnung erhöht. In einem deaktivierten Zustand der Unkrautsamenzerstörungseinrichtung ist die Sauggebläseanordnung gegenüber dem aktivierten Zustand der Unkrautsamenzerstörungseinrichtung mit verringertem Leistungsbedarf einsetzbar. Gegenüber dem aktivierten Zustand der Unkrautsamenzerstörungseinrichtung ist in einem deaktivierten Zustand der Unkrautsamenzerstörungseinrichtung die Sauggebläseanordnung mit verringertem Leistungsbedarf einsetzbar.

Um den Luftstrom der Sauggebläseanordnung zur Trennung von Nichtkornbestandteilen von auf den Sieben der Reinigungsvorrichtung befindlichen Erntegut zu nutzen, kann die Sauggebläseanordnung Luft im Wesentlichen durch einen vor der Reinigungsvorrichtung befindlichen Ansaugbereich ansaugen, wobei der generierte Luftstrom als ein die Siebe der Reinigungsvorrichtung durchdringender Reinigungsluftstrom wirkt.

Vorzugsweise können zur Ausbildung der Unkrautsamenzerstörungseinrichtung innerhalb der Sauggebläseanordnung eine Vielzahl von Aufprallelementen angeordnet sein, wobei ein Aufprall der Unkrautsamen auf die Aufprallelemente dessen Zerstörung bewirkt.

Eine besonders bevorzugte Weiterbildung sieht vor, dass die Sauggebläseanordnung einen konzentrisch zu dem Rotor angeordneten Stator umfasst, wobei der Rotor zur Durchführung einer Relativbewegung zu dem Stator eingerichtet ist. Mittels des Rotors kann das Erntegut beschleunigt werden und gegen am Stator befindliche Aufprallelemente prallen. Der Stator befindet sich hierfür im aktivierten Zustand der Unkrautsamenzerstörungseinrichtung vorzugsweise im Stillstand. Es kann aber auch vorgesehen sein, dass im aktivierten Zustand der Unkrautsamenzerstörungseinrichtung der Stator in seiner Rotationsbewegung gehemmt ist, sodass der Stator gegenüber dem Rotor eine deutlich verringerte Rotationsgeschwindigkeit aufweist. Stator und Rotor können zur Zerstörung der Unkrautsamen eine Hammermühle ausbilden.

Erfindungsgemäß ist der Rotor verdrehfest auf einer Welle angeordnet und der Stator drehbeweglich auf der Welle gelagert. Dies ermöglicht es zum einen, dass der Stator in einem deaktivierten Zustand der Unkrautsamenzerstörungseinrichtung durch den von dem Rotor generierten Luft- und Gutstrom in eine Rotationsbewegung versetzbar ist, sodass ein dem Rotor von dem Stator entgegengebrachter Strömungswiderstand wesentlich reduziert ist. Zum anderen kann der Stator in einem aktivierten Zustand der Unkrautsamenzerstörungseinrichtung im Gehäuse festgesetzt werden, sodass der Rotor eine Relativbewegung zu dem Stator durchführt.

Bevorzugt kann der Stator und der Rotor, jeweils eine oder mehrere kreisförmige Anordnungen von Aufprallelementen umfassen, die konzentrisch zu der Rotationsachse des Rotors angeordnet sind. In dieser Ausführungsform wirken der Stator und der Rotor nach dem Prinzip einer Hammermühle auf den Luft- und Gutstrom ein. Eine Vielzahl von Aufprallelement erhöht die Wahrscheinlichkeit der Zerstörung der Unkrautsamen. Darüber hinaus wirken die dem Rotor zugeordneten kreisförmigen Anordnungen von Aufprallelementen zusätzlich zur Beschleunigung auf den Luft- und Gutstrom ein. Die Saugwirkung der Sauggebläseanordnung kann somit zusätzlich erhöht werden.

In einer vorteilhaften Ausgestaltung können die kreisförmigen Anordnungen von Aufprallelementen des Stators und Rotors alternierend zueinander angeordnet sein, wobei vorzugsweise eine sich radial außenseitig befindliche kreisförmige Anordnung von Aufprallelemente dem Rotor zugeordnet ist. Die alternierende Anordnung der kreisförmigen Anordnung von Aufprallelement erhöht die Effizienz der Unkrautsamenzerstörungseinrichtung. Mittels einer dem Rotor zugeordneten äußeren kreisförmigen Anordnung von Aufprallelemente wird der Luft- und Gutstrom radial außenseitig nochmals beschleunigt, sodass dieser mit hoher Geschwindigkeit dem Kanalabschnitt zugeführt werden kann.

In einer weiteren vorteilhaften Ausgestaltung kann der Stator zumindest eine erste und eine zweite kreisförmige Anordnung von Aufprallelementen umfassen, wobei eine Aufpralloberfläche der ersten kreisförmigen Anordnung von Aufprallelementen in die umgekehrte Richtung orientiert ist wie die Aufpralloberfläche der zweiten kreisförmigen Anordnung von Aufprallelementen. Hierbei können die erste und eine zweite kreisförmige Anordnung von Aufprallelementen benachbart zueinander und die Aufprallelemente der ersten und zweiten Anordnung im Wesentlichen V-förmig zueinander angeordnet sein. Hierdurch ergeben sich in radialer Richtung der Sauggebläseanordnung labyrinthartige Durchgänge für den Luft- und Gutstrom. Diese Anordnung erhöht die Aufprallwahrscheinlichkeit der Unkrautsamen mit einem Aufprallelement.

Besonders bevorzugt ist es, wenn ein Feststellelement vorgesehen ist, das zum festsetzen des Stators eingerichtet ist, wobei in einer ersten Position des Feststellelements der Stator ortsfest innerhalb des Gehäuses angeordnet ist und in einer zweiten Position des Feststellelements der Stator rotationsbeweglich innerhalb des Gehäuses angeordnet ist. Dies ermöglicht es die Unkrautsamenzerstörungseinrichtung bedarfsweise auf einfache Art und Weise zu aktivieren oder deaktivieren, indem der Stator in einen ortsfesten bzw. drehbeweglichen Zustand innerhalb des Gehäuses versetzt wird.

Um die Herstellung des Rotors und Stators kostengünstig und auf einfache Art- und Weise zu gestalten, können diese als Schweißstecksystem ausgebildet sein.

Weiterhin ist es vorteilhaft, wenn dem Rotor beidseitig eine Eintrittsöffnung zugeordnet ist, sodass insbesondere der Rotor zu einer beidseitigen Beschickung mit einem Gut- und Luftstrom eingerichtet ist. Dadurch das dem Rotor in axialer Richtung beidseitig eine Eintrittsöffnung zugeordnet ist, wird der Durchsatz der Sauggebläseanordnung maximiert.

Zusätzlich zu einer aus Stator und Rotor gebildeten Unkrautsamenzerstörungseinrichtung oder als Alternative kann die Unkrautsamenzerstörungseinrichtung zwei Cräckerwalzen umfassen, die im Gehäuse der Sauggebläseanordnung angeordnet sind. Derartige Walzen sind bedarfsweise zu bzw. abschaltbar und besonders wirksam zur Zerstörung der Unkrautsamen.

Eine vorteilhafte Weiterbildung sieht vor, dass die Cräckerwalzen in einem unteren Bereich des Gehäuses angeordnet sind und den Cräckerwalzen ein Zuführkanal zugeordnet ist. Infolge der Zentrifugalkräfte werden die Unkrautsamen im besonderen Maße hin zu dem äußeren Gehäusebereich gefördert. Hier können diese mittels eines Zuführkanals hin zu den Crackerwalzen geleitet und dort mittels der Walzen zerstört werden.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung eines Mähdreschers 1 in einer Teilansicht;
- Figur 2: eine schematische Ansicht zweier spiegelbildlich zueinander angeordneter Gehäuseabschnitte 14 einer Sauggebläseanordnung 12;
- Figur 3a: eine schematische Ansicht eines innerhalb der Gehäuseabschnitte 14 befindlichen Stators 27 und Rotors 21;
- Figur 3b: eine schematische Schnittansicht eines innerhalb der Gehäuseabschnitte 14 befindlichen Stators 27 und Rotors 21;
- Figur 4: einen Stator mit einer kreisförmigen Anordnung von Aufprallelementen 38;
- Figur 5: eine schematische Explosionszeichnung des Rotors 21;
- Figur 6: einen Ausschnitt einer Eintrittsöffnung 23 der Sauggebläseanordnung 12;
- Figur 7: eine schematische Darstellung einer Sauggebläseanordnung 12 mit einer zusätzlichen oder alternativen Ausführungsform einer Unkrautsamenzerstörungseinrichtung 39.

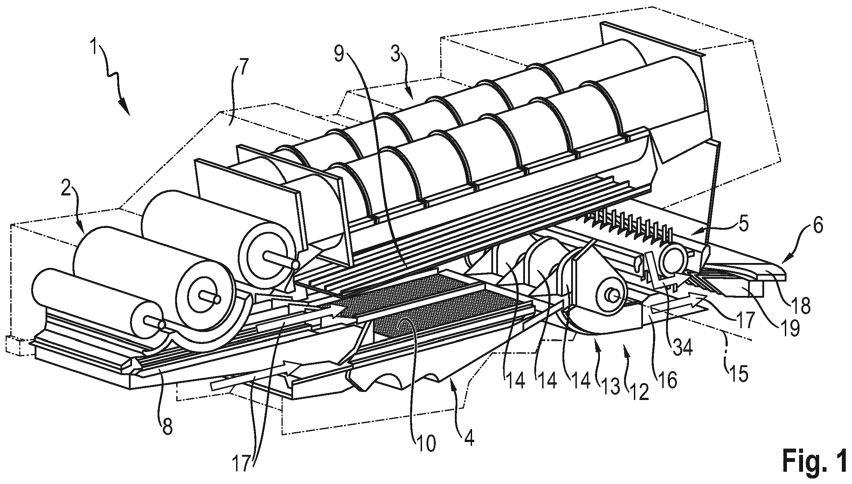

In Fig. 1 ist eine schematische Darstellung eines Mähdreschers 1 in einer Teilansicht gezeigt. Der Mähdrescher 1 umfasst eine Dreschvorrichtung 2, die als ein Mehrtrommeldreschwerk ausgeführt ist, eine Abscheidevorrichtung 3, die im dargestellten Ausführungsbeispiel als Trennrotoren ausgeführt ist, eine Reinigungsvorrichtung 4, eine Häckselvorrichtung 5 sowie eine Verteilvorrichtung 6, die als Streublechverteiler ausgeführt ist. Die Dreschvorrichtung 2, die Abscheidevorrichtung 3, die Reinigungsvorrichtung 4 sowie die Häckselvorrichtung 5 sind von einem Maschinengehäuse 7 umgeben. Die Verteilvorrichtung 6 ist außenseitig an dem Maschinengehäuse 7 angeordnet. Unterhalb der Dreschvorrichtung 2 ist ein oszillierend angetriebener Förderboden 8 angeordnet. Unterhalb der Abscheidevorrichtung 3 ist ein Rücklaufboden 9 angeordnet. Die Reinigungsvorrichtung 4 umfasst ein Obersieb 10 und ein Untersieb 11. Der Reinigungsvorrichtung 4 ist eine Sauggebläseanordnung 12 nachgeordnet, die als Reinigungsgebläse dient. An das Obersieb 10 der Reinigungsvorrichtung 4 schließt sich die Sauggebläseanordnung 12 an. Die Sauggebläseanordnung 12 weist zumindest ein Gehäuse 13 auf. Das zumindest eine Gehäuse 13 umfasst spiegelbildlich angeordnete konische Gehäuseabschnitte 14. Die Gehäuseabschnitte 14 sind koaxial zu einer horizontal ausgerichteten Rotationsachse 15 angeordnet. An das zumindest eine Gehäuse 13 schließt sich ein Führungssegment 16 an. Die Sauggebläseanordnung 12 saugt einen Luft- und Gutstrom 17 an, der im Wesentlichen Spreu, Kurzstroh und dergleichen enthält. Der Luft- und Gutstrom 17 wird im Wesentlichen im Bereich der Dreschvorrichtung 2 sowie der Reinigungsvorrichtung 4 angesaugt. Der Luft- und Gutstrom 17 wird von der Sauggebläseanordnung 12 über das Führungssegment 16 an die Verteilvorrichtung 6 weitergeleitet. Das Führungssegment 16 überbrückt den horizontal verlaufenden Abschnitt zwischen der Sauggebläseanordnung 12 und der Verteilvorrichtung 6. Oberhalb des Führungssegments 16 ist die Häckselvorrichtung 5 angeordnet, welche einen Gutstrom 34, der im Wesentlichen aus zerkleinertem Stroh besteht, an die Verteilvorrichtung 6 abgibt. Durch das Führungssegment 16 wird das Austreten von gehäckseltem Gut vor dem Erreichen der Verteilvorrichtung 6 verhindert.

Die als Streublechverteiler ausgeführte Verteilvorrichtung 6 umfasst ein Deckelbauteil 18, auf dessen Unterseite Streuleitbleche 19 angeordnet sind. Die Streuleitbleche 19 sind jeweils um eine vertikale Achse verschwenkbar an dem Deckelbauteil 18 angeordnet. Im Inneren des Deckelbauteils 18 ist eine Aktorik angeordnet, mittels der die Streuleitbleche 19 um die vertikale Achse einzeln oder gruppenweise verschwenkbar sind.

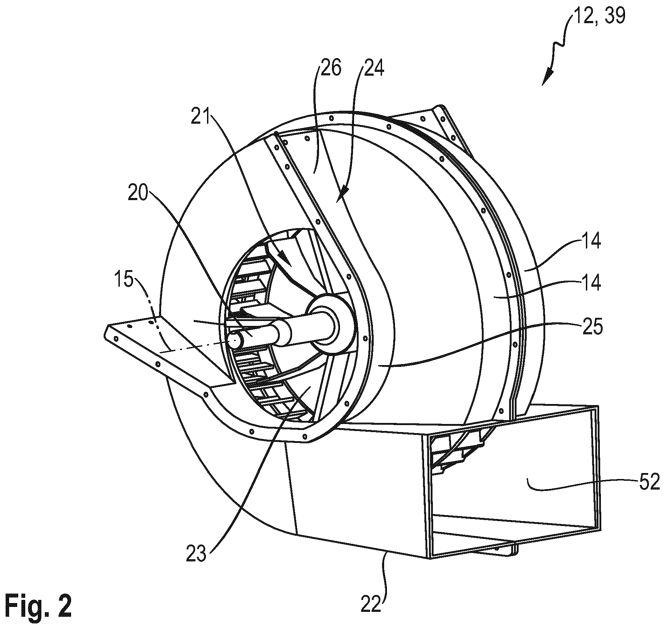

In Fig. 2 ist schematisch eine Ansicht zweier spiegelbildlich zueinander angeordneter Gehäuseabschnitte 14 der Sauggebläseanordnung 12 dargestellt. Koaxial zu der Rotationsachse 15 verläuft eine Welle 20, die sich über die Breite des Gehäuses 13 erstreckt. Auf der Welle 20 sind Rotoren 21 angeordnet, welche von jeweils zwei der kegelscheibenförmigen Gehäuseabschnitten 14 umgeben sind. Die kegelscheibenförmigen Gehäuseabschnitte 14 verjüngen sich nach außen in axialer Richtung. An dem jeweiligen Gehäuseabschnitt 14 ist ein Kanalsegment 22 angeordnet, in welches der von dem jeweiligen Rotor 21 geförderte Luft- und Gutstrom 17 einströmt. Das Kanalsegment 22 weist eine Austrittsöffnung 52 auf, aus welcher der Luft- und Gutstrom 17 austritt. Der aus den Kanalsegmenten 22 austretende Luft- und Gutstrom 17 wird über die Oberfläche des Führungssegments 16 der Verteilvorrichtung 6 zugeführt. Die Gehäuseabschnitte 14 weisen jeweils eine Eintrittsöffnung 23 auf, durch welche sich die horizontale Welle 20 erstreckt. Durch die jeweilige Eintrittsöffnung 23 wird der Luft- und Gutstrom 17 von den Rotoren 21 beidseitig angesaugt. Dabei wird der Bereich um die jeweilige Eintrittsöffnung 23, in welchem der Luft- und Gutstrom 17 von den Rotoren 21 angesaugt wird, durch sich in axialer Richtung verjüngende Leitabschnitte 24 begrenzt. Die Leitabschnitte 24 verhindern, dass ein unerwünschter Luftstrom aus dem der Häckselvorrichtung 5 zugewandten Bereich angesaugt wird. Die Leitabschnitte 24 weisen einen unteren halbkreisförmigen Abschnitt 25 auf, der im Wesentlichen koaxial zu der Welle 20 an dem Gehäuseabschnitt 14 angeordnet ist. Der halbkreisförmige Abschnitt 25 geht in einen gerade verlaufenden Abschnitt 26 über, der sich im Wesentlichen vertikal zu der Welle 20 erstreckt.

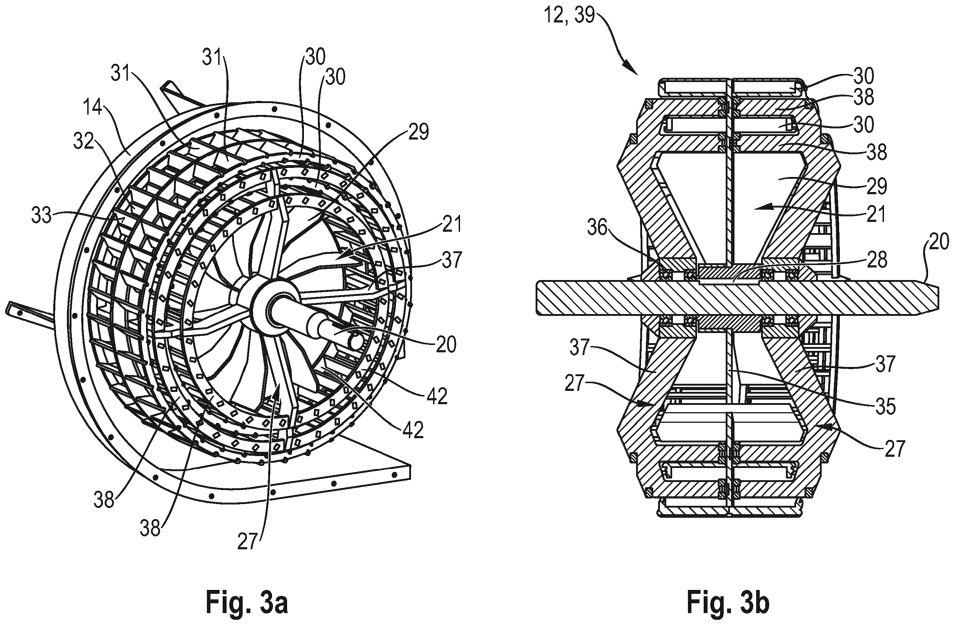

Figur 3a zeigt den innerhalb der Gehäuseabschnitte 14 auf der Welle 20 verdrehfest angeordneten Rotor 21 und einen auf der Welle 20 rotationsbeweglich angeordneten Stator 27 in einer schematischen Ansicht. In Figur 3b ist der auf der Welle 20 angeordneten Rotor 21 und der Stator 27 gemäß Figur 3a in einer Schnittansicht dargestellt. Der Rotor 21 ist mittels einer Passfeder 28 ortsfest auf der Welle 20 angeordnet. Im Zentrum des Rotors 21 befinden sich Schaufelblätter 29 zum Ansaugen des Luft- und Gutstroms 17. Die Schaufelblätter 29 erstrecken sich in radialer Richtung. Der Rotor 21 umfasst weiterhin zwei kreisförmige Anordnungen von Aufprallelementen 30. Die kreisförmigen Anordnungen 30 sind konzentrisch um die Welle 20 angeordnet und umschließen die Schaufelblätter 29 radial außenseitig. Die jeweilige Anordnung von Aufprallelementen 30 umfasst in Umfangsrichtung eine Vielzahl von beabstandet zueinander angeordneten Aufprallelementen 31. Zwischen zwei benachbart zueinander angeordneten Aufprallelementen befindet sich eine Durchgangsöffnung 32. Die Hauptfläche der Aufprallelemente 31 bildet die Aufpralloberfläche 33 und ist im Wesentlichen in Umfangsrichtung derart ausgerichtet, sodass diese im rotierenden Zustand den Luft- und Gutstrom 17 in Umfangsrichtung und in radialer Richtung des Rotors 21 ablenken. Die Schaufelblätter 29 sowie die Aufprallelemente 31 sind an einer Kreisscheibe 35 angeordnet.

Wie Figur 3b näher zeigt, ist auf der Welle 20 weiterhin zumindest ein Stator 27 drehbeweglich angeordnet. Hierfür ist der Stator 27 mittels Kugellagern 36 auf der Welle 20 gelagert. Der Stator 27 ist in der gezeigten Ausführungsform von zwei Statoreinheiten 27 gebildet, wobei der Rotor 21 zwischen den Statoreinheiten 27 auf der Welle 20 angeordnet ist. In einer alternativen Ausführungsform kann aber auch der Stator 27 zwischen zwei Rotoreinheiten 21 auf der Welle 20 angeordnet sein. Die Statoreinheiten 27 umfassen jeweils sich in radialer Richtung speichenförmig nach außen erstreckende Tragarme 37. An den Tragarmen 37 des Stators 21 sind ebenfalls kreisförmige Anordnungen von Aufprallelementen 38 angeordnet. Die dem Stator 27 und dem Rotor 21 zugeordneten kreisförmigen Anordnungen von Aufprallelementen 38, 30 sind in radialer Richtung alternierend zueinander angeordnet.

Der ortsfest auf der Welle 20 angeordnete Rotor 21 kann bei einer Rotationsbewegung eine Relativbewegung zu dem Stator 27 ausführen, sodass die in dem Luft- und Gutstrom 17 enthaltenen Unkrautsamen von dem Rotor 21 beschleunigt werden und gegen die Aufpralloberfläche 33 der dem Stator 27 zugeordneten Aufprallelemente 31 prallen. Der Aufprall zerstört die Unkrautsamen. Mithin bildet der Rotor 21 die Sauggebläseanordnung 12 und in Kombination mit dem Stator 27 zugleich eine Unkrautsamenzerstörungseinrichtung 39. Hierbei ist der Stator 27 ein erstes drehbeweglich auf der Welle 20 angeordnetes Element und der ortsfest auf der Welle 20 angeordnete Rotor 21 ein zweites drehbewegliches Element. Die Welle 20 ist mit einer hier nicht gezeigten Antriebseinheit verbunden.

In dem hier gezeigten Ausführungsbeispiel bildet eine dem Rotor 21 zugeordnete kreisförmige Anordnungen von Aufprallelementen 30 den äußeren Ring. Hierdurch wird der Luft- und Gutstrom 17 außenseitig nochmals beschleunigt und mit einer erhöhten Geschwindigkeit dem Kanalsegment 22 zugeführt.

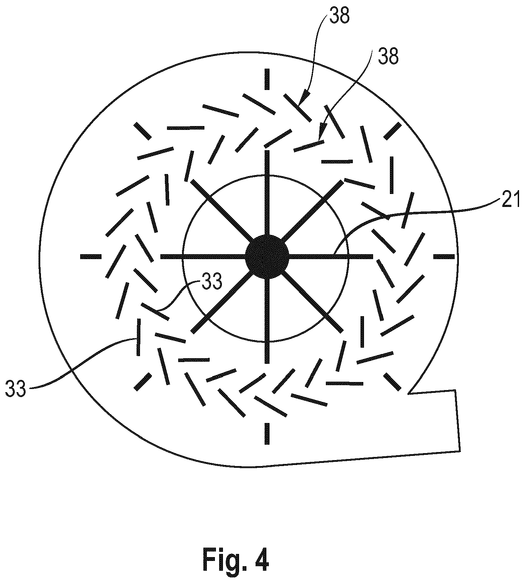

Eine alternative Anordnung der dem Stator 27 zugeordneten kreisförmigen Anordnungen von Aufprallelementen 38 ist in Figur 4 schematisch dargestellt. Der Stator 27 umfasst in dieser Ausführung eine erste und eine zweite kreisförmige Anordnung von Aufprallelementen 38, die benachbart zueinander und konzentrisch zur Rotationsachse der Welle 20 angeordnet sind. Die Aufpralloberfläche 33 der Aufprallelemente 31 der ersten kreisförmigen Anordnung von Aufprallelementen 38 sind in die umgekehrte Richtung orientiert wie die Aufpralloberfläche 33 der zweiten kreisförmigen Anordnung von Aufprallelementen 38. Hierbei sind die Aufprallelemente 31 der benachbarten kreisförmigen Anordnungen 38 im Wesentlichen V-förmig zueinander angeordnet. Diese Anordnung erhöht die Wahrscheinlichkeit eines Aufpralls von in dem Luft- und Gutstrom 17 befindlichen Unkrautsamen mit der Aufpralloberfläche 33 eines Aufprallelements 31.

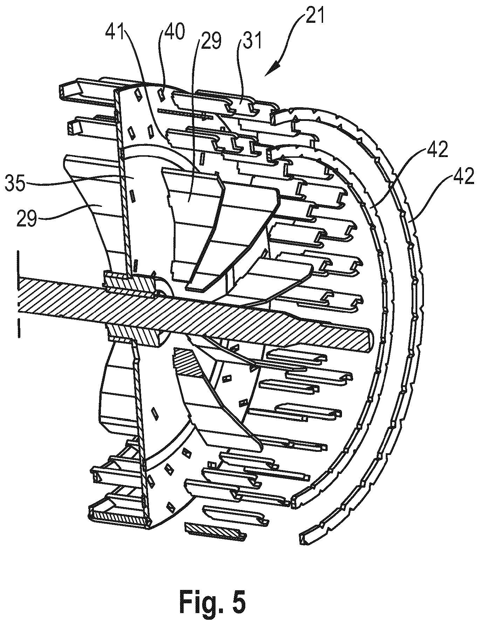

Figur 5 zeigt schematisch eine Explosionszeichnung des Rotors 21. Der Rotor 21 ist als Schweißstecksystem ausgeführt. Die Kreisscheibe 35 weißt hierfür eine Vielzahl von Aussparungen 40 auf, in welche die Schaufelblätter 29 und Aufprallelemente 31 mit komplementär zu den Aussparungen ausgebildeten Steckern 41 gestreckt werden. An den Aufprallelementen 31 ist auf der der Kreisscheibe 35 abgewandten Seite eine Ringscheibe 42 angeordnet. Der Stator 27 ist ebenfalls als Schweißstecksystem ausgebildet, wobei die Aufprallelemente 31 des Stators 27 mit zwei Ringscheiben 42 zusammengesteckt und mit diesen verschweißt sind. Die Ausbildung des Rotors 21 und Stators 27 als Schweißstecksystem ermöglicht eine einfache und kostengünstige Fertigung.

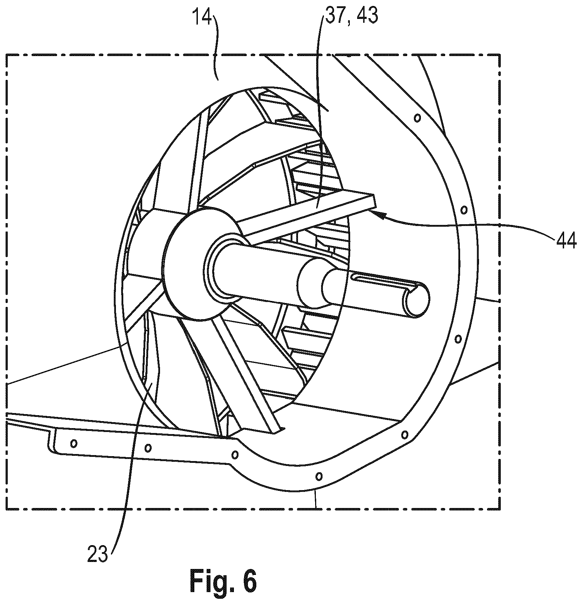

Figur 6 zeigt einen Ausschnitt einer Eintrittsöffnung 23 der Sauggebläseanordnung 12. Die Tragarme 37 des Stators 27 sind in der hier gezeigten Ausführung als Feststellelemente 43 ausgebildet. Mittels der Feststellelemente 43 ist die Unkrautsamenzerstörungseinrichtung 39 in einen deaktivierten oder aktivierten Zustand bringbar. Hierfür umfasst der Gehäuseabschnitt 14 im Bereich der Eintrittsöffnung 23 mehrere Aussparungen 44. Die Aussparungen 44 sind komplementär zu den Feststellelementen 43 ausgebildet und befinden sich in einer ersten Position des Tragarms 37 mit diesen im Eingriff, sodass der Stator 27 ortsfest in dem Gehäuse 13 festgesetzt ist. In einer nicht dargestellten zweiten Position der Feststellelemente 43 befinden sich selbige außerhalb der Aussparungen 44, sodass der Stator 27 frei drehend in dem Gehäuse 13 angeordnet ist. Zum automatischen Verstellen der als Feststellelemente 43 ausgeführten Tragarme 37 kann beispielsweise ein hier nicht gezeigter hydraulisch oder elektrisch ansteuerbarer Aktor vorgesehen sein, um den Stator 27 mitsamt den Tragarmen 37 in axialer Richtung von der ersten Position hin zu der zweiten Position zu verfahren. Alternative Ausführungen eines zum Festsetzen des Stators 27 in dem Gehäuse 13 eingerichteten Feststellelements 43 sind ebenfalls denkbar.

In der ersten Position des Feststellelements 43 befindet sich die Unkrautsamenzerstörungseinrichtung 39 im aktivierten Zustand und in der zweiten Position des Feststellelements 43 befindet sich die Unkrautsamenzerstörungseinrichtung 39 im deaktivierten Zustand. Dies ergibt sich dadurch, dass in einem ortsfest in dem Gehäuse 13 festgesetzten Zustand des Stators 27 die drehbeweglich zu dem Stator 27 angeordnete Welle 20 mitsamt dem Rotor 21 im Betriebszustand eine Relativbewegung zu dem Stator 27 durchführt. Ein von dem Rotor 21 generierte Luft- und Gutstrom 17 und die darin enthaltenen Unkrautsamen prallen in diesem Zustand gegen die Aufprallelemente 31 des Stators 27. Die Unkrautsamen werden durch den Aufprall zerstört. Bei der Ernte von Feldbeständen mit sehr geringen Mengen von Unkrautsamen befindet sich das Feststellelement 43 in seiner zweiten Position, sodass der Stator 27 freidrehend in dem Gehäuse 13 angeordnet ist. Der von dem Rotor 21 generierte Luft- und Gutstrom 17 treibt den Stator 27 an, sodass dieser im Wesentlichen mit derselben Rotationsgeschwindigkeit wie der Rotor 21 rotiert. In diesem Zustand ist ein von dem Stator 27 dem Luft- und Gutstrom 17 entgegengebrachter Strömungswiderstand erheblich reduziert. Der Stator 27 kann somit in seiner Funktion als Unkrautsamenzerstörungseinrichtung 39 bedarfsweise in einen festgesetzten Zustand gebracht werden. Unabhängig von dem Zustand des Stators 27 ist der Rotor 21 in seiner Funktion als Sauggebläseanordnung 12 betreibbar.

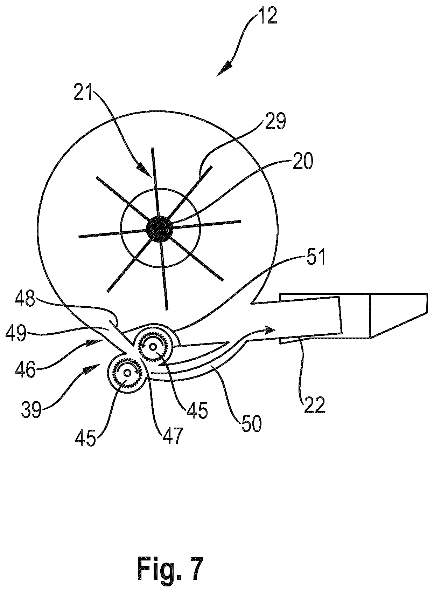

Figur 7 zeigt eine schematische Darstellung einer Sauggebläseanordnung 12 mit einer zusätzlichen oder alternativen Ausführungsform einer Unkrautsamenzerstörungseinrichtung 39. In der hier gezeigten Ausführungsform ist die Sauggebläseanordnung 12 lediglich als ein Rotor 21 mit Schaufelblättern 29 verdrehfest auf der Welle 20 ausgeführt. Eine Anordnung einer zuvor beschriebenen Kombination eines Rotors 21 mit einem Stator 27 ist ebenfalls denkbar. Wie Figur 7 zeigt, sind innerhalb des Gehäuses 13 der Sauggebläseanordnung 12 zwei Crackerwalzen 45 angeordnet, die zusammen eine Unkrautsamenzerstörungseinrichtung 39 bilden. Die Crackerwalzen 45 stellen zwei drehbeweglich in einem unteren Bereich des Gehäuses 46 der Sauggebläseanordnung 12 angeordnete Elemente dar. Die zwei Crackerwalzen 45 sind parallel zueinander angeordnet und bilden einen Spalt 47 zwischen sich aus. In ihrer Funktionsweise als Unkrautsamenzerstörungseinrichtung 39 sind die Crackerwalzen 45 in einen gegensinnig zueinander rotierenden Zustand versetzt. In diesem Zustand führt ein Reibeffekt zu einer Zerstörung von im Spalt 47 zwischen den Walzen 45 befindlichen Unkrautsamen. Die Crackerwalzen 45 sind dem Kanalsegment 22 vorgeordnet und befinden sich an einem radial außenseitig von den Rotoren 21 befindlichen Gehäusebereich 46. Ein Leitblech 48 formt einen Zuführkanal 49, der zum Zuführen der Unkrautsamen hin zu den Crackerwalzen 45 vorgesehen ist. Die innerhalb der Sauggebläseanordnung 12 befindlichen Unkrautsamen werden infolge der auf diese wirkenden Zentrifugalkräfte gegenüber den leichteren Erntegutbestandteilen im besonderen Maße nach außen befördert und entlang des äußeren Gehäusebereichs hin zu dem Zuführkanal 49 geleitet. Den Crackerwalzen 45 ist ein Bypasskanal 50 nachgeordnet, der in den Kanalabschnitt 22 mündet. Mittels des Bypasskanals 50 werden die zerstörten Unkrautsamen den Kanalabschnitt 22 zugeführt. Oberhalb der Crackwalzen 45 befindet sich eine Abdeckung 51 um den Gut- und Luftstrom 17 zwischen der Abdeckung 51 und dem Rotor 21 entlangzuführen. Der Rotor 21 kann in seiner Funktionsweise als Sauggebläseanordnung 12 unabhängig vom Zustand der Crackerwalzen 45 betrieben werden.

### Bezugszeichenliste:

| | | | |
|---|---|---|---|
| 1 | Mähdrescher | 33 | Aufpralloberfläche |
| 2 | Dreschvorrichtung | 34 | Gutstrom |
| 3 | Abscheidevorrichtung | 35 | Kreisscheibe |
| 4 | Reinigungsvorrichtung | 36 | Kugellager |
| 5 | Häckselvorrichtung | 37 | Tragarme |
| 6 | Verteilvorrichtung | 38 | Kreisförmige Anordnung Aufprallelemente Stator |
| 7 | Maschinengehäuse | 39 | Unkrautsamenzerstörungseinrichtung |
| 8 | Förderboden | 40 | Aussparung |
| 9 | Rücklaufboden | 41 | Stecker |
| 10 | Obersieb | 42 | Ringscheibe |
| 11 | Untersieb | 43 | Feststellelement |
| 12 | Sauggebläseanordnung | 44 | Aussparung |
| 13 | Gehäuse | 45 | Crackerwalze |
| 14 | Gehäuseabschnitt | 46 | Gehäusebereich |
| 15 | Rotationsachse | 47 | Spalt |
| 16 | Führungssegment | 48 | Leitblech |
| 17 | Luft- und Gutstrom | 49 | Zuführkanal |
| 18 | Deckelbauteil | 50 | Bypasskanal |
| 19 | Streuleitblech | 51 | Abdeckung |
| 20 | Welle | 52 | Austrittsöffnung |
| 21 | Rotor | | |
| 22 | Kanalsegment | | |
| 23 | Eintrittsöffnung | | |
| 24 | Leitabschnitte | | |
| 25 | Halbkreisförmiger Abschnitt | | |
| 26 | Gerader Abschnitt | | |
| 27 | Stator | | |
| 28 | Passfeder | | |
| 29 | Schaufelblätter | | |
| 30 | Kreisförmige Anordnung Aufprallelemente Rotor | | |
| 31 | Aufprallelement | | |
| 32 | Durchgangsöffnung | | |

## Patentansprüche

1. Selbstfahrender Mähdrescher (1), umfassend eine Dreschvorrichtung (2), eine Abscheidevorrichtung (3), eine Reinigungsvorrichtung (4), der eine Sauggebläseanordnung (12) mit zumindest einem Gehäuse (13), einem um eine Rotationsachse drehbeweglich angeordneten Rotor (21), zumindest einer Eintrittsöffnung (23) und zumindest einer Austrittsöffnung (52) nachgeordnet ist, eine Häckselvorrichtung (5) sowie zumindest eine Verteilvorrichtung (6) zur Annahme und Ausbringung eines die Häckselvorrichtung (5) durchlaufenden Gutstroms (34), wobei die Sauggebläseanordnung (12) eine Unkrautsamenzerstörungseinrichtung (39) umfasst, wobei die Unkrautsamenzerstörungseinrichtung (39) in das Gehäuse (13) der Sauggebläseanordnung (12) integriert ist, wobei die Sauggebläseanordnung (12) einen konzentrisch zu dem Rotor (21) angeordneten Stator (27) umfasst, wobei der Rotor (21) zur Durchführung einer Relativbewegung zu dem Stator (27) eingerichtet ist, **dadurch gekennzeichnet, dass** der Rotor (21) verdrehfest auf einer Welle (20) angeordnet ist und der Stator (27) drehbeweglich auf der Welle (20) gelagert ist.

2. Selbstfahrender Mähdrescher (1) nach Anspruch 1, **dadurch gekennzeichnet, dass** zumindest zwei rotierbeweglich angeordnete Elemente (21, 27, 45) die Unkrautsamenzerstörungseinrichtung (39) bilden, wobei die Elemente (21, 27, 45) zur Durchführung einer Relativbewegung zueinander eingerichtet sind.

3. Selbstfahrender Mähdrescher (1) nach einem der Ansprüche 1 oder 2, **dadurch gekennzeichnet, dass** die Unkrautsamenzerstörungseinrichtung (39) in einem aktivierten Zustand zur Zerstörung von in einem Gut- und Luftstrom (17) befindlichen Unkrautsamen eingerichtet ist und in einem deaktivierten Zustand die Funktion zur Zerstörung der Unkrautsamen deaktiviert ist, wobei die Sauggebläseanordnung (12) unabhängig von dem Zustand der Unkrautsamenzerstörungseinrichtung (39) betreibbar ist.

4. Selbstfahrender Mähdrescher (1) nach einem der Ansprüche 1 bis 3, **dadurch gekennzeichnet, dass** die Sauggebläseanordnung (12) Luft im Wesentlichen durch einen vor der Reinigungsvorrichtung (4) befindlichen Ansaugbereich ansaugt, wobei der generierte Luftstrom als ein die Siebe (10, 11) der Reinigungsvorrichtung (4) durchdringender Reinigungsluftstrom wirkt.

5. Selbstfahrender Mähdrescher (1) nach einem der Ansprüche 1 bis 4, **dadurch gekennzeichnet, dass** zur Ausbildung der Unkrautsamenzerstörungseinrichtung (39) innerhalb der Sauggebläseanordnung (12) eine Vielzahl von Aufprallelementen (31) angeordnet sind.

6. Selbstfahrender Mähdrescher (1) nach einem der Ansprüche 1 bis 5, **dadurch gekennzeichnet, dass** der Stator (27) und der Rotor (21), jeweils eine oder mehrere kreisförmige Anordnungen von Aufprallelementen (30, 38) umfassen, die konzentrisch zu der Rotationsachse (15) des Rotors (21) angeordnet sind.

7. Selbstfahrender Mähdrescher (1) nach Anspruch 6, **dadurch gekennzeichnet, dass** die kreisförmigen Anordnungen von Aufprallelementen (31) des Stators (27) und Rotors (21) alternierend zueinander angeordnet sind, wobei vorzugsweise eine sich radial außenseitig befindliche kreisförmige Anordnung von Aufprallelemente (30) dem Rotor (21) zugeordnet ist.

8. Selbstfahrender Mähdrescher (1) nach einem der Ansprüche 1 bis 7, **dadurch gekennzeichnet, dass** der Stator (21) zumindest eine erste und eine zweite kreisförmige Anordnung von Aufprallelementen (38) umfasst, wobei eine Aufpralloberfläche (33) der ersten kreisförmigen Anordnung von Aufprallelementen (38) in die umgekehrte Richtung orientiert ist wie die Aufpralloberfläche (33) der zweiten kreisförmigen Anordnung von Aufprallelementen (38).

9. Selbstfahrender Mähdrescher (1) nach einem der Ansprüche 1 bis 8, **dadurch gekennzeichnet, dass** ein Feststellelement (43) vorgesehen ist, das zum festsetzen des Stators (27) eingerichtet ist, wobei in einer ersten Position des Feststellelements (43) der Stator (27) ortsfest innerhalb des Gehäuses (13) angeordnet ist und in einer zweiten Position des Feststellelements (43) der Stator (27) rotationsbeweglich innerhalb des Gehäuses (13) angeordnet ist.

10. Selbstfahrender Mähdrescher (1) nach einem der Ansprüche 1 bis 9, **dadurch gekennzeichnet, dass** der Rotor (21) und Stator (27) als Schweißstecksystem ausgebildet sind.

11. Selbstfahrender Mähdrescher (1) nach einem der Ansprüche 1 bis 10, **dadurch gekennzeichnet, dass** dem Rotor (21) beidseitig eine Eintrittsöffnung (23) zugeordnet ist, sodass insbesondere der Rotor (21) zu einer beidseitigen Beschickung mit einem Gut- und Luftstrom (17) eingerichtet ist.

12. Selbstfahrender Mähdrescher (1) nach einem der Ansprüche 1 bis 11, **dadurch gekennzeichnet, dass** die Unkrautsamenzerstörungseinrichtung (39) zwei Cräckerwalzen (45) umfasst, die im Gehäuse (13) der Sauggebläseanordnung (12) angeordnet sind.

13. Selbstfahrender Mähdrescher (1) nach Anspruch 12, **dadurch gekennzeichnet, dass** die Cräckerwalzen (45) in einem unteren Bereich (46) des Gehäuses (13) angeordnet sind und den Cräckerwalzen (45) ein Zuführkanal (49) zugeordnet ist.

## Claims

1. A self-propelled combine harvester (1), comprising a threshing device (2), a separating device (3), a cleaning device (4), which is downstream of a suction fan assembly (12) with at least one housing (13), a rotor (21) which is rotatably movably disposed about an axis of rotation, at least one inlet opening (23) and at least one outlet opening (52), a chopping device (5) as well as at least one spreading device (6) for picking up and discharging a flow of material (34) passing through the chopping device (5), wherein the suction fan assembly (12) comprises a weed seed destruction device (39), wherein the weed seed destruction device (39) is integrated into the housing (13) of the suction fan assembly (12), wherein the suction fan assembly (12) comprises a stator (27) disposed concentrically with respect to the rotor (21), wherein the rotor (21) is configured to carry out a relative movement with respect to the stator (27), **characterized in that** the rotor (21) is disposed on a shaft (20) in a torsion-proof manner and the stator (27) is mounted on the shaft (20) in a rotatably movable manner.

2. The self-propelled combine harvester (1) according to claim 1, **characterized in that** at least two rotatably disposed elements (21, 27, 45) form the weed seed destruction device (39), wherein the elements (21, 27, 45) are configured for carrying out a relative movement with respect to each other.

3. The self-propelled combine harvester (1) according to claim 1 or claim 2, **characterized in that** in an activated state, the weed seed destruction device (39) is configured for the destruction of weed seeds located in a flow of material and air (17), and in a deactivated state, the weed seed destruction function is deactivated, wherein the suction fan assembly (12) can be operated independently of the state of the weed seed destruction device (39).

4. The self-propelled combine harvester (1) according to one of claims 1 to 3, **characterized in that** the suction fan assembly (12) draws in air substantially through an intake region located in front of the cleaning device (4), wherein the flow of air which is generated acts as a flow of cleaning air which penetrates through the sieves (10, 11) of the cleaning device (4).

5. The self-propelled combine harvester (1) according to one of claims 1 to 4, **characterized in that** a plurality of impact elements (31) are disposed inside the suction fan assembly (12) in order to construct the weed seed destruction device (39).

6. The self-propelled combine harvester (1) according to one of claims 1 to 5, **characterized in that** the stator (27) and the rotor (21) respectively comprise one or more circular assemblies of impact elements (30, 38) which are disposed concentrically with respect to the axis of rotation (15) of the rotor (21).

7. The self-propelled combine harvester (1) according to claim 6, **characterized in that** the circular assemblies of impact elements (31) of the stator (27) and rotor (21) are disposed in alternation with respect to each other, wherein preferably, a radially outwardly located circular assembly of impact elements (30) is associated with the rotor (21).

8. The self-propelled combine harvester (1) according to one of claims 1 to 7, **characterized in that** the stator (21) comprises at least a first and a second circular assembly of impact elements (38), wherein an impact surface (33) of the first circular assembly of impact elements (38) is orientated in the reverse direction to the impact surface (33) of the second circular assembly of impact elements (38).

9. The self-propelled combine harvester (1) according to one of claims 1 to 8, **characterized in that** a locking element (43) is provided which is configured to lock the stator (27), wherein in a first position of the locking element (43), the stator (27) is fixedly disposed inside the housing (13) and in a second position of the locking element (43), the stator (27) is rotatably movably disposed inside the housing (13).

10. The self-propelled combine harvester (1) according to one of claims 1 to 9, **characterized in that** the rotor (21) and stator (27) are constructed as a plug welded system.

11. The self-propelled combine harvester (1) according to one of claims 1 to 10, **characterized in that** an inlet opening (23) is associated with the rotor (21) on both sides, so that in particular, the rotor (21) is supplied with a flow of material and air (17) on both sides.

12. The self-propelled combine harvester (1) according to one of claims 1 to 11, **characterized in that** the weed seed destruction device (39) comprises two cracking rollers (45) which are disposed in the housing (13) of the suction fan assembly (12).

13. The self-propelled combine harvester (1) according to claim 12, **characterized in that** the cracking rollers (45) are disposed in a lower region (46) of the housing (13) and a supply channel (49) is associated with the cracking rollers (45).

## Revendications

1. Moissonneuse-batteuse (1) automotrice, comprenant un dispositif batteur (2), un dispositif de séparation (3), un dispositif de nettoyage (4), à la suite duquel est installé un système de ventilateur aspirant (12) comportant au moins un carter (13), un rotor (21) disposé avec possibilité de rotation autour d'un axe de rotation, au moins une ouverture d'entrée (23) et au moins une ouverture de sortie (52), et comprenant un dispositif hacheur (5) ainsi qu'au moins un dispositif de répartition (6) destiné à accueillir et évacuer un flux de produit (34) traversant le dispositif hacheur (5), sachant que le système de ventilateur aspirant (12) comprend un dispositif de destruction de graines de mauvaises herbes (39), le dispositif de destruction de graines de mauvaises herbes (39) étant intégré dans le carter (13) du système de ventilateur aspirant (12), le système de ventilateur aspirant (12) comprenant un stator (27) disposé de manière concentrique avec le rotor (21), le rotor (21) étant conçu pour exécuter un mouvement relatif par rapport au stator (27), **caractérisée en ce que** le rotor (21) est disposé de manière fixe en rotation sur un arbre (20), et le stator (27) est monté de façon mobile en rotation sur l'arbre (20).

2. Moissonneuse-batteuse (1) automotrice selon la revendication 1, **caractérisée en ce qu'**au moins deux éléments (21, 27, 45) disposés de façon mobile en rotation constituent le dispositif de destruction de graines de mauvaises herbes (39), les éléments (21, 27, 45) étant conçus pour exécuter un mouvement relatif les uns par rapport aux autres.

3. Moissonneuse-batteuse (1) automotrice selon une des revendications 1 ou 2, **caractérisée en ce que** dans un état activé, le dispositif de destruction de graines de mauvaises herbes (39) est conçu pour détruire des graines de mauvaises herbes contenues dans un flux de produit et d'air (17), et que dans un état désactivé, la fonction de destruction des graines de mauvaises herbes est désactivée, le système de ventilateur aspirant (12) pouvant fonctionner indépendamment de l'état du dispositif de destruction de graines de mauvaises herbes (39).

4. Moissonneuse-batteuse (1) automotrice selon une des revendications 1 à 3, **caractérisée en ce que** le système de ventilateur aspirant (12) aspire l'air sensiblement à travers une zone d'aspiration située devant le dispositif de nettoyage (4), le flux d'air généré agissant comme un flux d'air de nettoyage traversant les tamis (10, 11) du dispositif de nettoyage (4).

5. Moissonneuse-batteuse (1) automotrice selon une des revendications 1 à 4, **caractérisée en ce que** pour constituer le dispositif de destruction de graines de mauvaises herbes (39), une pluralité d'éléments d'impact (31) sont installés à l'intérieur du système de ventilateur aspirant (12).

6. Moissonneuse-batteuse (1) automotrice selon une des revendications 1 à 5, **caractérisée en ce que** le stator (27) et le rotor (21) comportent chacun un ou plusieurs agencements circulaires d'éléments d'impact (30, 38), qui sont disposés de manière concentrique avec l'axe de rotation (15) du rotor (21).

7. Moissonneuse-batteuse (1) automotrice selon la revendication 6, **caractérisée en ce que** les agencements circulaires d'éléments d'impact (31) du stator (27) et du rotor (21) sont disposés en alternance les uns avec les autres, sachant que de préférence un agencement circulaire d'éléments d'impact (30) situé radialement à l'extérieur est associé au rotor (21).

8. Moissonneuse-batteuse (1) automotrice selon une des revendications 1 à 7, **caractérisée en ce que** le stator (21) comprend au moins un premier et un deuxième agencement circulaire d'éléments d'impact (38), une surface d'impact (33) du premier agencement circulaire d'éléments d'impact (38) étant orientée dans le sens opposé à celui de la surface d'impact (33) du deuxième agencement circulaire d'éléments d'impact (38).

9. Moissonneuse-batteuse (1) automotrice selon une des revendications 1 à 8, **caractérisée en ce qu'**il est prévu un élément de blocage (43) qui est conçu pour immobiliser le stator (27), sachant que dans une première position de l'élément de blocage (43), le stator (27) est disposé de façon stationnaire dans le carter (13), et dans une deuxième position de l'élément de blocage (43), le stator (27) est disposé avec possibilité de rotation dans le carter (13).

10. Moissonneuse-batteuse (1) automotrice selon une des revendications 1 à 9, **caractérisée en ce que** le rotor (21) et le stator (27) sont réalisés sous forme de système enfichable soudé.

11. Moissonneuse-batteuse (1) automotrice selon une des revendications 1 à 10, **caractérisée en ce qu'**une ouverture d'entrée (23) est associée de part et d'autre au rotor (21), de sorte que notamment le rotor (21) est agencé en vue d'une alimentation bilatérale avec un flux de produit et d'air (17).

12. Moissonneuse-batteuse (1) automotrice selon une des revendications 1 à 11, **caractérisée en ce que** le dispositif de destruction de graines de mauvaises herbes (39) comprend deux rouleaux éclateurs (45) qui sont disposés dans le carter (13) du système de ventilateur aspirant (12).

13. Moissonneuse-batteuse (1) automotrice selon la revendication 12, **caractérisée en ce que** les rouleaux éclateurs (45) sont disposés dans une partie inférieure (46) du carter (13), et un canal d'amenée (49) est associé aux rouleaux éclateurs (49).
